**Europäisches Patentamt**

**European Patent Office**

**Office européen des brevets**

(19)

(11) Veröffentlichungsnummer: **0 130 226
B1**

# (12) EUROPÄISCHE PATENTSCHRIFT

(45) Veröffentlichungstag der Patentschrift:
**22.06.88**

(21) Anmeldenummer: **83106419.1**

(22) Anmeldetag: **01.07.83**

(51) Int. Cl.⁴: **B 61 L 1/16**, G 01 S 13/04

(54) Anordnung zum Zählen der Achsen bei schienengebundenen Fahrzeugen.

(43) Veröffentlichungstag der Anmeldung:
**09.01.85 Patentblatt 85/2**

(45) Bekanntmachung des Hinweises auf die Patenterteilung:
**22.06.88 Patentblatt 88/25**

(84) Benannte Vertragsstaaten:
**AT CH DE FR LI SE**

(56) Entgegenhaltungen:
**BE - A - 653 798
DE - A - 1 530 463
FR - A - 1 427 778
US - A - 3 941 338**

(73) Patentinhaber: **ANT Nachrichtentechnik GmbH,
Gerberstrasse 33, D-7150 Backnang (DE)**

(72) Erfinder: **Zappe, Helmut, Dipl.-Ing.,
Steinbacherstrasse 11, D-7151 Auenwald-Oberbrüden
(DE)**

(74) Vertreter: **Wiechmann, Manfred, Dipl.-Ing.
Patentabteilung, ANT Nachrichtentechnik GmbH
Gerberstrasse 33, D-7150 Backnang (DE)**

## Beschreibung

Die vorliegende Erfindung betrifft eine Anordnung zum Zählen der Achsen bei schienengebundenen Fahrzeugen, bestehend aus einer Mikrowellen aussendenden und die an vorbeirollenden Fahrzeugrädern reflektierten Wellen empfangenden Reflexionsmesseinrichtung, welche einen Generator für das auszusendende Mikrowellensignal und einen Gleichrichter zum Detektieren der an den Rädern reflektierten Signale aufweist.

Ein Achsenzähler kann beispielsweise eingesetzt werden im Rangierbetrieb, um festzustellen, ob ein Zug mit allen erforderlichen Waggons vollständig zusammengestellt ist. Auch kann ein Achsenzähler an einer Gleisstrecke als Gleisfreimelder verwendet werden. Dabei werden an einem oder mehreren Punkten eines Gleises die Achsen der vorbeifahrenden Züge gezählt, woraus man die Information, ob ein bestimmter Zug mit einer ganz bestimmten Anzahl von Achsen den oder die Punkte passiert hat, erhält.

Eine Reflexionsmesseinrichtung der eingangs genannten Art zum Detektieren beweglicher Objekte ist aus der BE-A 653 798 bekannt. Hierbei strahlt eine Sendeantenne Mikrowellen aus, und eine an einem anderen Ort angeordnete Empfangsantenne empfängt, wenn sich ein Objekt durch den Strahlengang bewegt, die unter einem bestimmten Winkel an dem Objekt reflektierten Mikrowellenanteile.

Anordnungen zum Detektieren von Rädern oder Zählen von Achsen bei schienengebundenen Fahrzeugen gehen aus der US-A 3 941 338 und der DE-A 1 530 463 hervor. Der Rad-Detektor der US-A 3 941 338 ist ein induktiv wirkender Sensor, der auf durch die vorbeirollenden Räder verursachte Veränderungen eines statischen Magnetfeldes reagiert. Der Achsenzähler der DE-A 1 530 463 besteht aus einem Ultraschallsender und einem getrennt davon plazierten Ultraschallempfänger, die beide am Gleis so angeordnet sind, dass eine Beeinflussung der Schallübertragung durch ein vorbeirollendes Rad erfolgt.

Der Erfindung liegt nun die Aufgabe zugrunde, eine Anordnung zum Zählen der Achsen bei schienengebundenen Fahrzeugen anzugeben, die mit geringem technischen Aufwand sehr zuverlässige Zählergebnisse liefert.

Diese Aufgabe wird durch die Merkmale des Patentanspruchs 1 gelöst.

Zweckmässige Ausführungen der Erfindung gehen aus den Unteransprüchen hervor.

Die erfindungsgemässe Anordnung hat den Vorteil, dass die ungestört von äusseren Einflüssen, wie Erschütterungen der Schienen oder Feuchtigkeit in Form von Regen und Schnee, zuverlässig die Achsen der vorbeifahrenden schienengebundenen Fahrzeuge zählt.

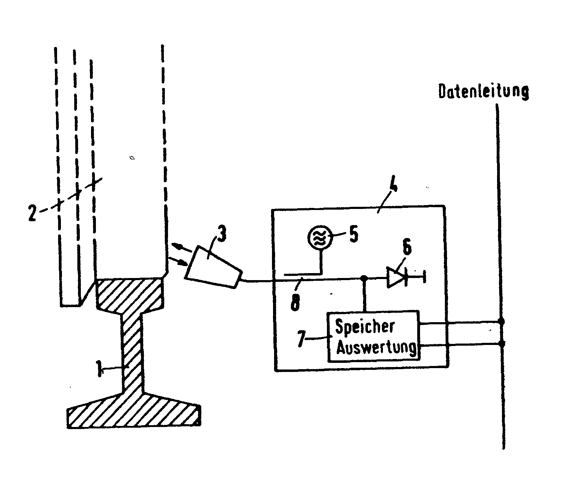

Anhand eines in der Zeichnung dargestellten Ausführungsbeispieles soll nun die Erfindung näher erläutert werden.

In der Figur ist im Querschnitt eine Schiene 1 mit einem darüber rollenden Rad 2, z.B. eines Zuges, dargestellt. Seitlich der Schiene befindet sich eine Antenne 3, beispielsweise ein Hornstrahler, einer Reflexionsmesseinrichtung 4. Die Antenne 3 muss in einem Bereich neben der Schiene angeordnet sein, der von Teilen der vorbeifahrenden Waggons des Zuges nicht berührt wird. Ein derartiger Freiraum besteht an der Innenseite der Schiene etwa in Höhe des Schienenkopfes. Wie die Figur zeigt, ist die Antenne gerade dort installiert und zwar so, dass die Mikrowellenstrahlen quer zur Schiene über die Lauffläche hinwegzielen. Es ist darauf zu achten, dass die Antenne so ausgerichtet ist, dass keine Strahlen an der Schiene reflektiert werden. Die Antenne wird an der Schiene befestigt, damit bei Erschütterungen keine Relativbewegung zwischen der Schiene und der Antenne entsteht. Somit ist die Gefahr ausgeschaltet, dass die Schiene in das Strahlungsfeld der sehr dicht an der Schiene angebrachten Antenne gerät und unerwünschte Reflexionen verursacht.

Strahlreflexionen sollen nähmlich nur die über die Schiene rollenden Räder ausüben. Die Antenne befindet sich deshalb in unmittelbarer Nähe zu den Rädern, weil nur das Nahfeld für die Reflexionsmessung ausgenutzt werden soll. Beeinflussungen des Fernfeldes etwa durch auf benachbarten Gleisen vorbeifahrenden Zügen sind gegenüber den Nahfeldreflexionen so gering, dass sie sich auf die Messung nicht auswirken. Ausserdem braucht bei der Ausnutzung des Nahfeldes nur eine relativ geringe Mikrowellenenergie abgestrahlt zur werden.

Die Reflexionsmesseinrichtung besteht aus einem Mikrowellengenerator 5, einem Gleichrichter 6 und einer Speicher-/Auswerteeinheit 7. Ein mit der Antenne 3 verbundener Koppler 8 dient dazu, das von dem an einem ersten Kopplertor angeschlossenen Mikrowellengenerator 5 abgegebene Signal zur Antenne zu leiten und das von der Antenne empfangene Reflexionssignal dem Gleichrichter 6 und der Speicher-/Auswerteeinheit 7, welche beide an einem zweiten Kopplertor angeschlossen sind, zuzuführen. Kommt ein Reflexionssignal über die Antenne zurück, so wird es vom Gleichrichter 6 detektiert und von der Speicher-/Auswerteeinheit 7 registriert. Die Speicher-/Auswerteeinheit hält alle registrierten Reflexionssignale, deren Zahl ja der Zahl der auf einer Schiene vorbeigefahrenen Räder und damit der Achsenzahl des Zuges entspricht, fest und gibt schliesslich das Zählergebnis über eine Datenleitung, z.B. an ein Stellwerk, weiter.

Es ist u.U. zweckmässig, die Antenne der Reflexionsmesseinrichtung mit einem beheizten Radom zu versehen oder sie auf einer beheizbaren Platte anzuordnen, um sie schnee- und eisfrei zu halten.

Bei Verwendung zweier solcher oben beschriebener Reflexionsmesseinrichtungen, die in einem Abstand von ca. 106 cm nebeneinander an einer Schiene angeordnet sind, kann sogar die Fahrtrichtung des vorbeifahrenden Zuges ermittelt werden. Dazu muss nur festgehalten werden, in welcher zeitlichen Reihenfolge die beiden Refle-

xionsmesseinrichtungen beim Passieren der Räder ein Reflexionssignal empfangen.

## Patentansprüche

1. Anordnung zum Zählen der Achsen bei schienengebundenen Fahrzeugen, bestehend aus einer Mikrowellen aussendenden und die an vorbeirollenden Fahrzeugrädern (2) reflektierten Wellen empfangenden Reflexionsmesseinrichtung (4), welche einen Generator (5) für das auszusendende Mikrowellensignal und einen Gleichrichter (6) zum Detektieren der an den Rädern reflektierten Signale aufweist, dadurch gekennzeichnet, dass die Reflexionsmesseinrichtung (4) eine einzige Antenne (3) zum Aussenden und Empfangen der Mikrowellen-Signale besitzt, und dass der Generator (5) für das auszusendende Mikrowellensignal an einem ersten Tor und der Gleichrichter (6) zum Detektieren der an den Fahrzeugrädern (2) reflektierten Signale an einem zweiten Tor eines mit der Antenne (3) verbundenen Kopplers (8) angeschlossen ist, und dass die Antenne (3) an einer Schiene (1) in unmittelbarer Nähe zu den vorbeirollenden Fahrzeugrädern (2) befestigt und so installiert ist, dass das Strahlungsfeld der Antenne (3) quer zur Schiene (1) direkt über deren Lauffläche ausgerichtet ist, ohne dass Strahlreflexionen an der Schiene (1) entstehen.

2. Anordnung nach Anspruch 1, dadurch gekennzeichnet, dass die Reflexionsmesseinrichtung (4) eine Speicher/Auswerteeinheit (7) für die detektierten Reflexionssignale besitzt.

3. Anordnung nach Anspruch 1, dadurch gekennzeichnet, dass das Strahlungsfeld der Antenne (3) auf den Radkranz des jeweils vorbeirollenden Rades (2) gerichtet ist.

4. Anordnung nach einem der vorhergehenden Ansprüche, dadurch gekennzeichnet, dass zwei Reflexionsmesseinrichtungen nebeneinander an einer Schiene angeordnet sind und dass sich die von den Reflexionsmesseinrichtungen ausgesendeten Mikrowellensignale in ihrer Frequenz voneinander unterscheiden.

5. Anordnung nach Anspruch 4, dadurch gekennzeichnet, dass sie verwendet wird, um die Fahrtrichtung des schienengebundenen Fahrzeugs zu ermitteln, indem die zeitliche Folge der von den Reflexionsmesseinrichtungen registrierten Reflexionssignale festgehalten wird.

## Claims

1. An arrangement for counting the axles of rail-bound vehicles, the arrangement comprising a reflection measuring device (4) which receives microwaves that it transmitted and that are reflected at vehicle wheels (2) rolling by and which includes a generator (5) for the microwave signal to be transmitted as well as a rectifier (6) for detecting the signals reflected at the wheels, characterized in that the reflection measuring device (4) is provided with a single antenna (3) for transmitting and receiving the microwave signals; and the generator (5) for the microwave signal to be transmitted is connected to a first port and the rectifier (6) for detecting the signals reflected at the vehicle wheels (2) is connected to a second port of a coupler (8) connected with the antenna (3); and the antenna (3) is fastened to a rail (1) in the immediate vicinity of the vehicle wheels (2) rolling by and is installed in such a manner that the radiation field of the antenna (3) is oriented transversely to the rail (1) directly above the running surface of said rail, without radiation being reflected at said rail (1).

2. An arrangement according to claim 1, characterized in that the reflection measuring device (4) includes a memory/evaluation unit (7) for the detected reflected signals.

3. An arrangement according to claim 1, characterized in that the radiation field of the antenna (3) is oriented toward the rim of the respective wheel (2) rolling by.

4. An arrangement according to one of the preceding claims, characterized in that two reflection measuring devices are arranged next to one another at one rail and the microwave signals transmitted by the reflection measuring devices differ from one another in their frequency.

5. An arrangement according to claim 4, characterized in that it is used to determine the direction of travel of the rail-bound vehicle in that the time sequence of the reflected signals recorded by the reflection measuring device is retained.

## Revendications

1. Agencement de comptage d'essieux de véhicules ferroviaires, constitué par un dispositif de mesure de réflexion (4) émettant des micro-ondes et recevant les ondes réfléchies sur des roues (2) de véhicules passant devant lui, ce dispositif de mesure de réflexion présentant un générateur (5) pour produire le signal de micro-ondes à émettre et un redresseur (6) pour détecter les signaux réfléchis sur les roues, caractérisé par le fait que dispositif de mesure de rélexion (4) possède une seule antenne (3) pour l'émission et la réception des micro-ondes, et par le fait que le générateur (5) du signal de microondes à émettre est raccordé à une première porte et le redresseur (6) pour détecter les signaux réfléchis sur les roues (2) des véhicules est raccordé à une deuxième porte d'un coupleur (8) relié à l'antenne (3), et par le fait que l'antenne (3) est fixée à un rail (1), à proximité immédiate des roues (2) de véhicules passant, et est installée de façon que son champ de rayonnement soit orienté transversalement au rail (1) directement au-dessus de sa surface de roulement, sans que des réflexions de rayonnement se produisent sur le rail (1).

2. Agencement selon revendication 1, caractérisé par le fait que le dispositif de mesure de réflexion (4) possède une unité de mémoire/interprétation (7) pour les signaux de réflexion détectés.

3. Agencement selon revendication 1, caractérisé par le fait que le champ de rayonnement de l'antenne (3) est dirigé vers la jante de la roue passant devant elle.

4. Agencement selon l'une des revendications précédentes, caractérisé par le fait que deux dispositifs de mesure de réflexion sont agencés l'un à côté de l'autre sur un rail, et par le fait que les signaux de micro-ondes émis par les dispositifs de mesure de réflexion ont des fréquences différentes.

5. Agencement selon revendication 4, caractérisé par le fait qu'el est utilisé pour déterminer le sens de la marche du véhicule ferroviaire, en enregistrer la succession cronologique de signaux de reflexion détectés par le dispositif de mesure de réflexion (4).

Datenleitung

Speicher
Auswertung